(19) Europäisches Patentamt
European Patent Office
Office européen des brevets

(11) Veröffentlichungsnummer : **0 157 119**
**B1**

(12) # EUROPÄISCHE PATENTSCHRIFT

(45) Veröffentlichungstag der Patentschrift : **30.09.87**

(51) Int. Cl.[4] : **C 08 G 18/65**, C 08 G 18/40

(21) Anmeldenummer : **85101243.5**

(22) Anmeldetag : **06.02.85**

(54) **Verfahren zur Herstellung von gegebenenfalls zelligen Polyurethan-Polyharnstoff-Formkörpern.**

(30) Priorität : **17.02.84 DE 3405679**

(43) Veröffentlichungstag der Anmeldung : **09.10.85 Patentblatt 85/41**

(45) Bekanntmachung des Hinweises auf die Patenterteilung : **30.09.87 Patentblatt 87/40**

(84) Benannte Vertragsstaaten : **BE DE FR GB IT NL SE**

(56) Entgegenhaltungen :
**EP-A- 0 026 915**
**EP-A- 0 069 286**
**DE-A- 2 840 388**
**FR-A- 1 546 122**
**US-A- 4 218 543**

(73) Patentinhaber : **BASF Aktiengesellschaft**
**Carl-Bosch-Strasse 38**
**D-6700 Ludwigshafen (DE)**

(72) Erfinder : **Werner, Frank, Dr.**
**Erschigweg 9**
**D-6730 Neustadt (DE)**
Erfinder : **Marx, Matthias Dr.**
**Seebacher Strasse 49**
**D-6702 Bad Duerkheim (DE)**
Erfinder : **Horn, Peter, Dr.**
**Neue Stuecker 15**
**D-6900 Heidelberg (DE)**
Erfinder : **Schmidt, Hans Ulrich**
**Wredestrasse 53**
**D-6700 Ludwigshafen (DE)**

**EP 0 157 119 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u. a. und organischen Polyisocyanate sowie durch zusätzliche Mitverwendung von Kettenverlängerungsmitteln, wie Glykolen oder Diaminen, können nach dieser Methode sowohl elastische wie starre Polyurethane sowie alle dazwischen liegenden Modifikationen hergestellt werden.

Zur Herstellung der Polyurethanelastomeren werden nach DE-PS 831 604 (US 2 778 810) aus den hydroxylgruppenhaltigen Verbindungen und Polyisocyanaten zunächst NCO-gruppenhaltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 11 49 523 (US 3 105 062) werden den flüssigen, NCO-gruppenhaltigen Präpolymeren kristalline, aromatische diprimäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE-PS 12 40 654 (US 3 428 610) werden die NCO-gruppenhaltigen Präpolymeren bei Raumtemperatur oder mäßig erhöhten Temperaturen mit solchen flüssigen oder gelösten aromatischen Diaminen umgesetzt, die in o-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Ein Verfahren zur Herstellung von gegebenenfalls zelligen, elastischen Formkörpern mit einer geschlossenen Oberflächenschicht aus Polyurethan-Polyharnstoff-Elastomeren nach dem Prinzip der Reaktionsspritzgußtechnik (RIM) wird in der DE-AS 26 22 951 (US 4 218 543) beschrieben. Die genannten Systeme bestehen im wesentlichen aus organischen Polyisocyanaten, Polyolen, reaktiven aromatischen Di- bzw. Polyaminen, die in o-Stellung zur Aminogruppe durch Alkylgruppen substituiert sind und starken Katalysatoren für die Reaktion zwischen Hydroxyl- und Isocyanatgruppen. Wesentlich hierbei ist, daß die aromatischen Di- bzw. Polyamine in jedem Verhältnis mit Polyolen des Molekulargewichts 1 200 bis 1 800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der o-Stellungen zu den Aminogruppen substituiert ist. Derartige Systeme besitzen Startzeiten bis herab zu weniger als einer Sekunde ; der Übergang der flüssigen in die feste Phase erfolgt nahezu schlagartig, was dazu führt, daß das flüssige Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE-PS 12 16 538 (GB-PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus gesundheitsschädlichen Bedenken aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE-AS 26 22 951 etwas verminderter Reaktivität und dadurch verbesserter Fließfähigkeit werden nach Angaben der EP-OS 26 915 erhalten, wenn man als aromatische Diamine 3,3',5,5'-tetraalkylsubstituierte 4,4'-Diaminodiphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diaminodiphenylmethane sind mit den Polyolen in den erforderlichen Mengen bei Raumtemperatur sehr gut mischbar und zeigen nur eine geringe oder gar keine Kristallisationsneigung, so daß die Formulierungen unter den für konventionelle RIM-Systeme üblichen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP-OS 26 915 etwas reaktivere Polyurethan-Polyharnstoff-Formulierungen werden in der EP-OS 69 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200 °C zeigen.

Aber selbst mit dieser Vielzahl an bereits beschriebenen Verfahren konnten nicht alle Forderungen des Marktes hinsichtlich der Verarbeitbarkeit der Formulierungen und der mechanischen Eigenschaften der erhaltenen Formkörper befriedrigt werden.

Hochreaktive, aromatische Diamine enthaltende Formulierungen weisen beispielsweise den Nachteil auf, daß sie Formkörper ergeben, die nur eine begrenzte Steifigkeit bis zu einem Biege-E-Modul von ungefähr 600 N/mm² zeigen. Eine weitere Erhöhung des Diamingehaltes führt zu einer Versprödung der Formkörper.

Aufgabe der vorliegenden Erfindung war es, Polyurethan-Polyharnstoff-Formulierungen zu entwickeln, die als one shot-Systeme nach der Methode der Reaktionsspritzgußtechnik (RIM = reaction injection moulding) zu Formkörpern mit Biege-E-Modulen größer als 600 N/mm² verarbeitet werden können.

Diese Aufgabe konnte überraschenderweise gelöst werden durch ein Verfahren zur Herstellung von zellhaltigen oder kompakten Polyurethan-Polyharnstoff-Formkörpern durch Umsetzung von

a) organischen Polyisocyanaten,
b) höhermolekularen Verbindungen mit mindestens zwei reaktiven Wasserstoffatomen,
c) aromatischen Diaminen und gegebenenfalls
d) weiteren Kettenverlängerungsmitteln und/oder Vernetzern in Gegenwart von
e) Katalysatoren und gegebenenfalls
f) Treibmitteln,
g) Hilfsmitteln und/oder Zusatzstoffen

als one shot-Systeme nach der Reaktionsspritzgußtechnik, das dadurch gekennzeichnet ist, daß man als höhermolekulare Verbindungen mit mindestens zwei reaktiven Wasserstoffatomen (b) Mischungen verwendet aus

i) mindestens einer Verbindung aus der Gruppe der Polyole, Polyetherpolyamine, Polyesteramide oder deren Gemische mit einer Funktionalität von 2 bis 6 und einem Molekulargewicht von 1 000 bis 8 000 und

ii) mindestens einem aromatischen und/oder aromatisch-aliphatischen Polyester-polyol mit einer Funktionalität von 2 bis 3 und einem Molekulargewicht von 254 bis 700.

Die nach dem erfindungsgemäßen Verfahren hergestellten Polyurethan-Polyharnstoff-Formkörper besitzen Biege-E-Module größer als 600 N/mm² bei vergleichbaren Werten für die übrigen mechanischen Eigenschaften.

Zu den für das erfindungsgemäße Verfahren verwendbaren Aufbaukomponenten (a) bis (c) und (e) sowie gegebenenfalls (d), (f) und (g) ist folgendes auszuführen.

a)

Als organische Polyisocyanate (a) kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, Tetramethylen-diisocyanat-1,4 und vorzugsweise Hexamethylen-diisocyanat-1,6 ; cycloaliphatische Diisocyanate, wie Cyclohexan-1,3- und 1,4-di-isocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate, wie 4,4'-, 2,4'- und 2,2'-Diisocyanato-diphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylen-polyisocyanate, 2,4,6-Triisocyanato-toluol und Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d. h. Produkte, die durch chemische Umsetzung obiger Di- und/oder Polyisocyanate erhalten werden, verwendet, Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z. B. in der britischen Patentschrift 994 890, den ausgelegten Unterlagen des belgischen Patents 761 626 und der NL-OS 71 02 524 beschrieben werden, Isocyanuratgruppen aufweisende Polyisocyanate, wie sie z. B. in den DE-PS 10 22 789, 12 22 067 und 10 27 394 sowie den DE-OS 19 29 034 und 20 04 048 beschrieben werden, Urethangruppen aufweisende Polyisocyanate, wie sie z. B. in den ausgelegten Unterlagen des belgischen Patents 752 261 oder der US-PS 3 394 164 beschrieben werden, acylierte Harnstoffgruppen aufweisende Polyisocyanate z. B. gemäß DE-PS 12 30 778, Biuretgruppen aufweisende Polyisocyanate z. B. gemäß DE-PS 11 01 394 und GB-PS 889 050 ; durch Telomerisationsreaktionen hergestellte Polyisocyanate z. B. entsprechend den ausgelegten Unterlagen des belgischen Patents 723 640, Estergruppen aufweisende Polyisocyanate, wie sie z. B. in der GB-PS 965 474 und 1 072 956, der US-PS 3 567 765 und der DE-PS 12 31 688 genannt werden.

Vorzugsweise kommen jedoch zur Anwendung : urethangruppenhaltige Polyisocyanate, beispielsweise mit niedermolekularen linearen oder verzweigten Alkandiolen, Dialkylenglykolen oder Polyoxyalkylenglykolen mit Molekulargewichten bis 800 auf Basis von Ethylenoxid, 1,2-Propylenoxid oder deren Gemischen modifiziertes 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh-MDI) und Gemische aus Toluylendiisocyanaten und Roh-MDI.

b)

Als höhermolekulare Verbindungen (b) mit mindestens zwei reaktiven Wasserstoffatomen werden erfindungsgemäß Mischungen verwendet aus

i) einer oder mehreren Verbindungen aus der Gruppe der Polyole, beispielsweise der Polythioether-polyole, der hydroxylgruppenhaltigen Polyacetale, der hydroxylgruppenhaltigen aliphatischen Polycarbonate oder vorzugsweise der Polyether- oder Polyester-polyole, der Polyether-polyamine, Polyesteramide oder deren Gemische mit einer Funktionalität von 2 bis 6, vorzugsweise 2 bis 4 und einem Molekulargewicht von 1 000 bis 8 000, vorzugsweise 1 800 bis 4 000, und

ii) mindestens einem aromatischen und/oder aromatisch-aliphatischen Polyester-polyol mit einer Funktionalität von 2 bis 3, vorzugsweise 2, und einem Molekulargewicht von 254 bis 700, vorzugsweise 260 bis 500.

Besonders bewährt haben sich und daher vorzugsweise verwendet werden Mischungen, die

i) 95 bis 60 Gew.%, insbesondere 90 bis 75 Gew.% eines Polyether-polyamins, Polyesteramids oder vorzugsweise Polyols, insbesondere Polyether- und/oder Polyester-polyols und

ii) 5 bis 40 Gew.%, insbesondere 10 bis 25 Gew.% eines aromatischaliphatischen oder vorzugsweise aromatischen Polyester-polyols oder deren Gemische enthalten, wobei die Gew.% bezogen sind auf das Gesamtgewicht von (i) und (ii) und die Komponenten (i) und (ii) die obengenannte Funktionalitäten und Molekulargewichte besitzen.

Wie bereits dargelegt wurde, werden als Polyole (i) vorzugsweise Polyester- und Polyether-polyole verwendet.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht : Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20-35 : 35-50 : 20-32 Gew. Teilen, und insbesondere Adipinsäure. Beispiele für zwei- und mehrwertige Alkohole, insbesondere Diole sind : Ethandiol, Diethylenglykol, 1,2-bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z. B. ε-Caprolacton, oder Hydroxycarbonsäuren, z. B. ω-Hydroxycapronsäure.

Die Polyester-polyole besitzen vorzugsweise eine Funktionalität von 2 bis 3 und ein Molekulargewicht von 1 000 bis 3 000 und vorzugsweise 1 800 bis 2 500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u. a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 6, vorzugsweise 2 bis 4, reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht : Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak,

Hydrazin und Hydrazide. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit und Sorbit.

Die Polyether-polyole besitzen Molekulargewichte von 1 000 bis 8 000, vorzugsweise 1 200 bis 6 000 und insbesondere 1 800 bis 4 000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen, Polycarbonaten und/oder Polyether-polyaminen gemischt werden.

Als hydroxylgruppenhaltige Polyacetale kommen z. B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder Phosgen hergestellt werden können.

Zu den Polyesteramiden zählen z. B. die aus mehrwertigen gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Hydroxyl- und/oder Aminogruppen enthaltende Kondensate.

Geeignete Polyether-polyamine können aus den obengenannten Polyether-polyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die Aminierung von Polyoxyalkylen-polyolen mit Aminen oder Ammoniak in Gegenwart von Wasserstoff und Katalysatoren (DE 12 15 373).

Die aromatisch-aliphatischen und vorzugsweise aromatischen Polyester-polyole (ii) werden nach bekannten Methoden durch Polykondensation von aromatischen Dicarbonsäuren oder Dicarbonsäurederivaten, beispielsweise Dicarbonsäureanhydriden oder -diestern, und gegebenenfalls aliphatischen Dicarbonsäuren oder -derivaten und aliphatischen Diolen und/oder Triolen hergestellt. Bei Verwendung von aromatisch-aliphatischen Polyester-polyolen ist wesentlich, daß diese, bezogen auf Dicarbonsäureeinheiten, überwiegend, d. h. zu 50 bis 99 Gew.%, vorzugsweise 60 bis 90 Gew.% aus einkondensierten aromatischen Dicarbonsäureresten bestehen. Als geeignete aromatische Dicarbonsäuren seien beispielhaft Terephthalsäure, Isophthalsäure und vorzugsweise Phthalsäure genannt, die einzeln oder in Form von Mischungen eingesetzt werden können. Diese aromatischen Dicarbonsäuren können zur Herstellung der aromatisch-aliphatischen Polyester-polyole beispielsweise mit gesättigten oder ethylenisch ungesättigten Dicarbonsäuren wie z. B. Bernstein-, Glutar-, Adipin-, Kork-, Malein- oder/und Fumarsäure gemischt werden. Als Diole und/oder Triole haben sich beispielsweise bewährt : Ethandiol, Diethylenglykol, Butandiol-1,4, Neopentylglykol, Hexandiol-1,6, Propandiol-1,3 bzw. -1,2, Dipropylenglykol, Triethylenglykol, Tetraethylenglykol, Glycerin, Trimethylolpropan und/oder Triethylolpropan. Als bevorzugt verwendete Ausgangskomponenten seien Phthalsäure und Ethylenglykol und/oder Diethylenglykol genannt. Die erfindungsgemäß verwendbaren aromatischen oder aromatischen-aliphatischen Polyester-polyole besitzen zweckmäßigerweise Säurezahlen kleiner als 3, vorzugsweise von 0,3 bis 2, und entsprechend den obengenannten Molekulargewichten und Funktionalitäten Hydroxylzahlen von 160 bis 442, vorzugsweise von 220 bis 430. Die aromatischen oder aromatisch-aliphatischen Polyester-polyole (ii) können einzeln oder als Mischungen Anwendung finden. Sie können in der Mischung in den Polyolen, Polyesteramiden und/oder Polyether-polyaminen (i) ganz oder teilweise löslich sein oder dispergiert vorliegen.

c)

Als aromatische Diamine werden bei dem erfindungsgemäßen Verfahren primäre aromatische Diamine verwendet. Zweckmäßigerweise verwendet werden aromatische Diamine, deren primäre Aminogruppen gegenüber Polyisocyanaten keine durch elektronenanziehende Substituenten verursachte verminderte Reaktivität zeigen oder vorteilhafterweise solche aromatische Diamine, deren primäre Aminogruppen sterisch gehindert sind. Insbesondere geeignet sind primäre aromatische Diamine der genannten Art, die in mindestens einer o-Stellung zu jeder Aminogruppe einen linearen und/oder verzweigten Alkylrest mit 1 bis 12 Kohlenstoffatomen gebunden enthalten, bei Raumtemperatur flüssig und mit der Komponente (b) unter den Verarbeitungsbedingungen ganz oder zumindest teilweise mischbar sind. Bewährt haben sich beispielsweise meta-Phenylendiamin und/oder vorzugsweise alkylsubstituierte meta-Phenylendiamine der Formeln

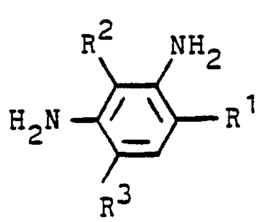

und / oder

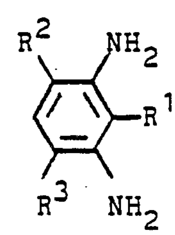

in denen $R^1$ ein Wasserstoffatom oder ein linearer oder verzweigter Alkylrest mit 1 bis 12, vorzugsweise 1 bis 6 Kohlenstoffatomen ist und $R^2$ und $R^3$ gleiche oder verschiedene Alkylreste mit 1 bis 3 Kohlenstoffatomen, wie z. B. ein Methyl-, Ethyl-, Propyl- oder Isopropylrest sind. Geeignet sind insbesondere solche Alkylreste $R^1$, bei denen die Verzweigungsstelle am $C_1$-Kohlenstoffatom sitzt. Neben Wasserstoff seien als Alkylreste $R^1$ beispielhaft genannt : der Methyl-, Ethyl-, n- und iso-Propyl-, Butyl-, Hexyl-, Octyl-, Decyl-, 1-Methyl-octyl-, 2-Ethyl-octyl-, 1-Methyl-hexyl-, 1,1-Dimethyl-pentyl-, 1,3,3-Trimethyl-hexyl-, 1-Ethyl-pentyl-, 2-Ethyl-pentyl- und vorzugsweise der Cyclohexyl-, 1-Methyl-n-propyl-, tert.-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht : 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-4,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner Diamino-diphenylmethane, wie z. B. 4,4'- und/oder 2,4'-Diamino-diphenylmethan, 3,3'-di- und 3,3',5,5'-tetra-n-alkylsubstituierte 4,4'-Diamino-diphenylmethane wie z. B. 3,3'-Diethyl-, 3,3',5,5'-Tetraethyl- und 3,3',5,5'-Tetra-n-propyl-4,4'-diamino-diphenylmethan.

Anwendung finden vorteilhafterweise Diamino-diphenylmethane der Formel

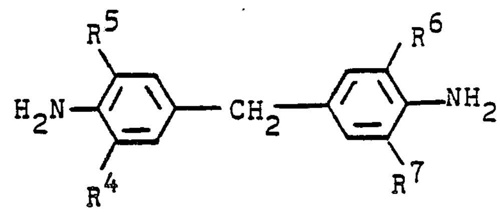

in der $R^4$, $R^5$, $R^6$ und $R^7$ gleich oder verschieden sind und einen Methyl-, Ethyl-, Propyl-, Isopropyl-, sek.-Butyl- und tert.-Butylrest bedeuten, wobei jedoch mindestens einer der Reste ein Isopropyl- oder sek.-Butylrest sein muß. Die 4,4'-Diamino-diphenylmethane können auch im Gemisch mit Isomeren der Formeln

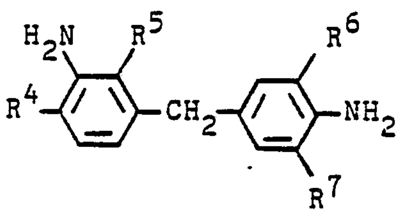

und / oder

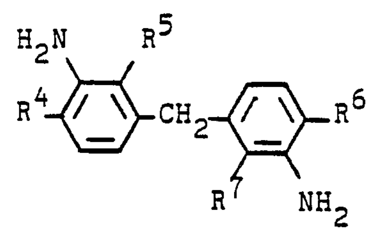

verwendet werden, wobei $R^4$, $R^5$, $R^6$ und $R^7$ die obengenannte Bedeutung haben.

Beispielhaft genannt seien : 3,3',5-Trimethyl-5'-isopropyl-, 3,3',5-Triethyl-5'-isopropyl-, 3,3',5-Trimethyl-5'-sek.-butyl-, 3,3',5-Triethyl-5'-sek.-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek.-butyl-, 3,3'-Diethyl-5,5'-di-sek.-butyl-, 3,5-Dimethyl-3',5'-diisopropyl-, 3,5-Diethyl-3',5'-diisopropyl-, 3,5-Dimethyl-3',5'-di-sek.-butyl-, 3,5-Diethyl-3',5'-di-sek.-butyl-4,4'-diamino-diphenylmethan, 3-Methyl-3',5,5'-triisopropyl-, 3-Ethyl-3',5,5'-triisopropyl-, 3-Methyl-3',5,5'-tri-sek.-butyl-, 3-Ethyl-3',5,5'-tri-sek.-butyl-4,4'-diamino-diphenylmethan, 3,3'-Diisopropyl-5,5'-di-sek.-butyl-, 3,5-Diisopropyl-3',5'-di-sek.-butyl-, 3-Ethyl-5-sek.-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetraisopropyl- und 3,3',5,5'-Tetra-sek.-butyl-4,4'-diaminodiphenylmethan.

Vorzugsweise verwendet werden folgende primären aromatischen Diamine : 2,4-Diethyl-, 2,4-Dimethyl-phenylendiamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Die primären aromatischen Diamine können einzeln oder in Form von Mischungen, beispielsweise aus gegebenenfalls alkylsubstituierten 1,3-Phenylendiaminen, Diamino-diphenylmethanen, 3,3'-di- und/oder 3,3',5,5'-tetraalkylsubstituierten 4,4'-Diamino-diphenylmethanen eingesetzt werden. Außerdem können die primären aromatischen Diamine mit maximal 50 Gew.%, bezogen auf das Gesamtgewicht, primären aromatischen Tri- bis Pentaminen, wie z. B. Polyphenyl-polymethylen-polyaminen gemischt sein, wobei die aromatischen Polyamine zweckmäßigerweise ebenfalls mindestens in einer o-Stellung zu den Aminogruppen mit einem Alkylrest substituiert sind.

Die primären aromatischen Diamine oder deren Mischungen kommen beim erfindungsgemäßen Verfahren in Mengen von 5 bis 150 Gew. Teilen, vorzugsweise 8 bis 100 Gew. Teilen und insbesondere 10 bis 80 Gew. Teilen, bezogen auf 100 Gew. Teile der Komponente (b), zur Anwendung.

d)

Gegebenenfalls kann es zweckmäßig sein, insbesondere bei der Herstellung von zellhaltigen Polyurethan-Polyharnstoff-Formkörpern, die obengenannten primären aromatischen Diamine teilweise durch Kettenverlängerungsmittel und/oder Vernetzer zu ersetzen. Die Kettenverlängerungsmittel oder Vernetzer besitzen vorteilhafterweise Molekulargewichte kleiner als 500, vorzugsweise von 30 bis 400 und weisen vorzugsweise zwei aktive Wasserstoffatome auf. In Betracht kommen beispielsweise aliphatische und/oder araliphatische Diole mit 2 bis 14, vorzugsweise 2 bis 6 Kohlenstoffatomen, wie Ethylenglykol, Propandiol-1,3, Decandiol-1,10, Diethylenglykol, Dipropylenglykol, Bis-(2-hydroxyethyl)-hydrochinon und vorzugsweise Ethylenglykol, Butandiol-1,4 und Hexandiol-1,6, Triole, wie Glycerin und Trimethylolpropan, niedermolekulare Polyoxyalkylen-polyole auf Basis Ethylen- und/oder Propylenoxid und den vorgenannten Startermolekülen und sek. aromatische Diamine, von denen beispielhaft genannt seien : N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek.-pentyl-, N,N'-Di-sek.-hexyl-, N,N'-Di-sek.-decyl-, N,N'-Dicyclohexyl-p- bzw. -m-phenylendiamin, N,N'-Dimethyl-, N,N'-Diethyl-, N,N'-Diisopropyl-, N,N'-Di-sek.-butyl-, N,N'-Dicyclohexyl-4,4'-diamino-diphenylmethan und N,N'-Di-sek.-butyl-benzidin.

Die Kettenverlängerungsmittel und/oder Vernetzer können einzeln oder in Form von Mischungen eingesetzt werden. Sofern Mischungen aus aromatischen Diaminen (c) und Kettenverlängerungsmittel und/oder Vernetzern (d) Anwendung finden, enthalten diese vorteilhafterweise pro 100 Gew. Teile aromatisches Diamin- oder -mischung (c) 0,1 bis 50, vorzugsweise 4 bis 30 Gew. Teile der Komponente (d).

e)

Als Katalysatoren (e) werden insbesondere Verbindungen verwendet, die die Reaktion der Hydroxylgruppen enthaltenden Verbindungen der Komponenten (b) und gegebenenfalls (d) mit den Polyisocyanaten stark beschleunigen. In Betracht kommen organische Metallverbindungen, vorzugsweise organische Zinnverbindungen, wie Zinn-(II)-salze von organischen Carbonsäuren, z. b. Zinn-(II)-acetat, Zinn-(II)-octoat, Zinn-(II)-ethylhexoat und Zinn-(II)-laurat und die Dialkylzinn-(IV)-salze von organischen Carbonsäuren, z. B. Dibutyl-zinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin. Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht : Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Katalysator bzw. Katalysatorkombination, bezogen auf das Gewicht der Komponente (b).

f)

Zu Treibmitteln (f), welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.%, bezogen auf das Gewicht der Komponente (b).

Andere verwendbare Treibmittel sind niedrigsiedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-2,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew. Teilen, bezogen

auf 100 Gew. Teile der Komponente (b) zufriedenstellende Ergebnisse.

Der Reaktionsmischung können gegebenenfalls auch noch Hilfsmittel und/oder Zusatzstoffe (g) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin oder stearinsaures Diethanolamin, Salze von Sulfonsäuren, z. B. Alkali- oder Ammoniumsalze von Dodecylbenzol- oder Dinaphthylmethandisulfonsäure und Ricinolsäure ; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile der Komponente (b), angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt : anorganische Füllstoffe wie silikatische Mineralien, beispielsweise Schichtsilikate wie Antigorit, Serpentin, Hornblenden, Amphibole, Chrisotil, Talkum ; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u. a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht : Kohle, Melamin, Kollophonium, Cyclopentadienylharze und Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt und danach gegebenenfalls aminiert werden sowie Filler-polyoxyalkylen-polyole oder -polyamine, bei denen wäßrige Polymerdispersionen in Polyoxyalkylen-polyol- oder -polyamindispersionen übergeführt werden.

Die anorganischen und organischen Füllstoffe können einzeln oder als Gemische verwendet werden. Vorzugsweise Anwendung finden stabile Füllstoff-Polyoxyalkylen-polyol-Dispersionen, bei denen die Füllstoffe in Gegenwart von Polyoxyalkylen-polyolen in situ mit hohen örtlichen Energiedichten auf eine Teilchengröße kleiner als 7 µm zerkleinert und hierbei gleichzeitig dispergiert werden.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt.

Geeignete Flammschutzmittel sind beispielsweise Trikresylphosphat, Tris-2-chlorethylphosphat, Tris-chlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat zum Flammfestmachen der Formkörper verwendet werden. Im allgemeinen hat es sich als zweckmäßig erwiesen, 5 bis 50 Gew. Teile, vorzugsweise 5 bis 25 Gew. Teile der genannten Flammschutzmittel für jeweils 100 Gew. Teile der Komponente (b) zu verwenden.

Nähere, Angaben über die obengenannten anderen üblichen Hilfs- und Zusatzstoffe sind der Fachliteratur, beispielsweise der Monographie von J. H. Saunders und K. C. Frisch « High Polymers » Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörper werden die organischen Polyisocyanate (a), höhermolekularen Verbindungen mit mindestens zwei reaktiven Wasserstoffatomen (b), aromatischen Diamine (c) und gegebenenfalls Kettenverlängerungsmittel und/oder Vernetzer (d) in solchen Mengen zur Umsetzung gebracht, daß das Äquivalenz-Verhältnis von NCO-Gruppen der Polyisocyanate (a) zur Summe der reaktiven Wasserstoffatome der Komponenten (b), (c) und gegebenenfalls (d) 1 : 0,85 bis 1,25, vorzugsweise 1 : 0,95 bis 1,15 beträgt.

Die Herstellung der zellhaltigen und vorzugsweise kompakten Polyurethan-Polyhanstoff-Formkörper erfolgt nach dem Prepolymer- oder vorzugsweise nach dem one shot-Verfahren mit Hilfe der bekannten Reaktionsspritzguß-Technik. Diese Verfahrensweise wird beispielsweise beschrieben von Piechota und Röhr in « Integralschaumstoff », Carl-Hanser-Verlag, München, Wien 1975 ; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem Zweikomponenten-Verfahren zu arbeiten und die primären aromatischen Diamine und gegebenenfalls Kettenverlängerungsmittel und/oder Vernetzer in den höhermolekularen Verbindungen mit mindestens zwei reaktiven Wasserstoffatomen (b) zu lösen und gegebenenfalls mit

Treibmitteln, Hilfs- und Zusatzstoffen in der Komponente (A) zu vereinigen und als Komponente (B) die organischen Polyisocyanate zu verwenden. Vorteilhaft ist hierbei beispielsweise, daß die Komponenten (A) und (B) getrennt gelagert und raumsparend transportiert werden können und bei der Verarbeitung nur noch in den entsprechenden Mengen gemischt werden müssen.

Die nach dem erfindungsgemäßen Verfahren hergestellten Formkörper sind in wesentlichen kompakt oder besitzen einen mikrozellularen oder zelligen Kern und eine kompakte Außenhaut. Die Gesamtdichte beträgt 0,2 bis 1,4 g/cm³.

Die Menge des in die Form eingebrachten Reaktionsgemisches wird so bemessen, daß die erhaltenen mikrozellularen bzw. kompakten Formkörper eine Dichte von 0,8 bis 1,4 g/cm³, vorzugsweise von 0,8 bis 1,2 g/cm³ und die zellhaltigen Formkörper eine Dichte von 0,2 bis 1,1 g/cm³, vorzugsweise von 0,25 bis 0,8 g/cm³ aufweisen. Die Ausgangskomponenten werden mit einer Temperatur von 15 bis 80 °C, vorzugsweise von 20 bis 55 °C in die Form eingebracht. Die Formtemperatur beträgt zweckmäßigerweise 20 bis 90 °C, vorzugsweise 30 bis 75 °C, gegebenenfalls kann es vorteilhaft sein, übliche Formtrennmittel, beispielsweise auf Wachs- oder Silikonbasis, nach jedem 3. bis 10. Formfüllvorgang zur Verbesserung der Entformung, einzusetzen. Die Verdichtungsgrade zur Herstellung der mikrozellularen oder zellhaltigen Formkörper liegen zwischen 1,1 und 8, vorzugsweise zwischen 2 und 8.

Die nach dem erfindungsgemäßen Verfahren erhaltenen kompakten bzw. mikrozellularen Polyurethan-Polyharnstoff-Formkörper eignen sich insbesondere zur Verwendung in der Automobilindustrie, beispielsweise als Stoßstangenabdeckungen, Rammschutzleisten und Karosserieteile wie Regenrinnen, Kotflügel, Spoiler und Radkästenverbreiterungen sowie technische Gehäuseteile, Laufrollen und Schuhsohlen. Die zellhaltigen Formkörper finden beispielsweise als Armlehnen, Kopfstützen, Sicherheitsabdeckungen im Automobilinnenraum sowie als Motorrad- und Fahrradsättel und Deckschnichten in Verbundschaumstoffen Anwendung.

Die in den Beispielen genannten Teile beziehen sich auf das Gewicht.

## Beispiele

Allgemeine Herstellvorschrift

Die Aufbaukomponenten wurden auf einer Hochdruckdosieranlage vom Typ ®Puromat 30 der Elastogran Maschinenbau verarbeitet. Die Temperatur der Aufbaukomponenten betrug 50 °C. Das metallische Formwerkzeug besaß die Innenabmessungen 400 × 200 × 4 mm und wies eine Temperatur von 50 °C auf.

### Beispiel 1

61,52 Teile eines Polyether-polyols mit einer OH-Zahl von 26, das durch Addition von 1,2-Propylenoxid an Trimethylolpropan und anschließende Addition von Ethylenoxid erhalten wurde,

15,38 Teile eines Polyester-polyols mit der OH-Zahl 290, das aus Phthalsäureanhydrid und Propandiol-1,3 hergestellt wurde,

22 Teile 2,4-Dimethyl-6-tert.-butyl-phenylendiamin-1,3,

1 Teil 1,4-Diazabicyclo-(2,2,2)-octan in Dipropylenglykol (33 gew.%ig)

und

0,2 Teile Dibutylzinndilaurat wurden mit 66,5 Teilen eines Urethangruppen enthaltenden 4,4'-Diphenylmethan-diisocyanates mit einem NCO-Gehalt von 23 Gew.%, was einem Index von 1,05 entspricht, umgesetzt.

An den erhaltenen Prüfplatten wurden folgende mechanischen Eigenschaften gemessen :

| | |
|---|---|
| Raumgewicht [g/cm³] | 1,1 |
| Zugfestigkeit [N/mm²] | 30,6 |
| Bruchdehnung [%] | 254 |
| Weiterreißfestigkeit [N/mm] nach Graves | 88,8 |
| Shore D-Härte | 66 |
| Biege-E-Modul [N/mm²] bei 23 °C | 693 |

### Beispiel 2

61,52 Teile eines Polyether-polyols mit einer OH-Zahl von 26, das durch Addition von 1,2-Propylenoxid an Trimethylolpropan und anschließende Addition von Ethylenoxid erhalten wurde,

15,38 Teile eines Polyester-polyols mit der OH-Zahl 292, das aus Phthalsäureanhydrid und Ethylenglykol hergestellt wurde,

22 Teile 2,4-Dimethyl-6-tert.-butyl-phenylendiamin-1,3,

1 Teil 1,4-Diazabicyclo-(2,2,2)-octan in Dipropylenglykol (33 gew.%ig)

und

0,2 Teile Dibutylzinndilaurat wurden mit 66,5 Teilen des Isocyanates aus Beispiel 1 umgesetzt.

An den erhaltenen Formkörpern wurden folgende mechanischen Eigenschaften gemessen :

| | |
|---|---|
| Raumgewicht [g/cm³] | 1,1 |
| Zugfestigkeit [N/mm²] | 26,9 |
| Bruchdehnung [%] | 262 |
| Weiterreißfestigkeit [N/mm] nach Graves | 72,2 |
| Shore D-Härte | 67 |
| Biege-E-Modul [N/mm²] bei 23 °C | 800 |

Beispiel 3

61,52 Teile eines Polyether-polyols mit einer OH-Zahl von 26, das durch Addition von 1,2-Propylenoxid an Trimethylolpropan und anschließende Addition von Ethylenoxid erhalten wurde,

15,38 Teile eines Polyester-polyols mit der OH-Zahl 240, das aus Phthalsäureanhydrid und Ethylenglykol hergestellt wurde,

22 Teile 2,4-Dimethyl-6-tert.-butyl-phenylendiamin-1,3,

1 Teil 1,4-Diazabicyclo-(2,2,2)-octan in Dipropylenglykol (33 gew.%ig)

und

0,2 Teile Dibutylzinndilaurat wurden mit 63,9 Teilen des Isocyanates aus Beispiel 1 umgesetzt. An den erhaltenen Formkörpern wurden folgende mechanischen Eigenschaften gemessen :

| | |
|---|---|
| Raumgewicht [g/cm³] | 1,1 |
| Zugfestigkeit [N/mm²] | 28,8 |
| Bruchdehnung [%] | 282 |
| Weiterreißfestigkeit [N/mm] nach Graves | 78,3 |
| Shore D-Härte | 63 |
| Biege-E-Modul [N/mm²] bei 23 °C | 620 |

Beispiel 4

67,9 Teile eines Polyether-polyols mit einer OH-Zahl von 26, das durch Addition von 1,2-Propylenoxid an Trimethylolpropan und anschließende Addition von Ethylenoxid erhalten wurde,

9 Teile eines Polyester-polyols mit der OH-Zahl 409, das aus Phthalsäureanhydrid und Ethylenglykol hergestellt wurde,

22 Teile 2,4-Dimethyl-6-tert.-butyl-phenylendiamin-1,3,

1 Teil 1,4-Diazabicyclo-(2,2,2)-octan in Dipropylenglykol (33 gew.%ig)

und

0,1 Teil Dibutylzinndilaurat wurden mit 64,4 Teilen des Isocyanates aus Beispiel 1 umgesetzt. Die erhaltenen Prüfplatten besaßen folgende mechanische Eigenschaften :

| | |
|---|---|
| Raumgewicht [g/cm³] | 1,1 |
| Zugfestigkeit [N/mm²] | 31,6 |
| Bruchdehnung [%] | 325 |
| Weiterreißfestigkeit [N/mm] nach Graves | 96,9 |
| Shore D-Härte | 65 |
| Biege-E-Modul [N/mm²] bei 23 °C | 685 |

Vergleichsbeispiel

76,9 Teile eines Polyether-polyols der OH-Zahl 26, das durch Addition von 1,2-Propylenoxid an Trimethylolpropan und anschließende Addition von Ethylenoxid erhalten wurde,

22 Teile 2,4-Dimethyl-6-tert.-butyl-phenylendiamin-1,3,

1 Teil 1,4-Diazabicyclo-(2,2,2)-octan in Dipropylenglykol (33 gew.%ig)

und

0,1 Teil Dibutylzinndilaurat wurden mit 52,6 Teilen eines Urethangruppen enthaltenden 4,4′-Diphenylmethandiisocyanates mit einem Isocyanatgehalt von 23 % umgesetzt, was einem Index von 1,05 entspricht.

Die mit dem Ansatz hergestellten Platten wiesen folgende Eigenschaften auf :

| | |
|---|---|
| Raumgewicht [g/cm³] | 1,1 |
| Zugfestigkeit [N/mm²] | 29,5 |
| Bruchdehnung [%] | 399 |
| Weiterreißfestigkeit [N/mm] nach Graves | 97,5 |
| Shore D-Härte | 58 |
| Biege-E-Modul [N/mm²] bei 23 °C | 447 |

**Patentansprüche**

1. Verfahren zur Herstellung von zellhaltigen oder kompakten Polyurethan-Polyharnstoff-Formkörpern durch Umsetzung von

a) organischen Polyisocyanaten,
b) höhermolekularen Verbindungen mit mindestens zwei reaktiven Wasserstoffatomen,
c) aromatischen primären Diaminen und gegebenenfalls
d) weiteren Kettenverlängerungsmitteln und/oder Vernetzern in Gegenwart von
e) Katalysatoren und gegebenenfalls
f) Treibmitteln
g) Hilfsmitteln und/oder Zusatzstoffen

als one shot-Systeme nach der Reaktionsspritzgußtechnik, dadurch gekennzeichnet, daß man als höhermolekulare Verbindungen mit mindestens zwei reaktiven Wasserstoffatomen (b) Mischungen verwendet aus

i) mindestens einer Verbindung aus der Gruppe der Polyole, Polyether-polyamine, Polyesteramide oder deren Gemische mit einer Funktionalität von 2 bis 6 und einem Molekulargewicht von 1 000 bis 8 000 und
ii) mindestens einem aromatischen und/oder aromatisch-aliphatischen Polyester-polyol, das, bezogen auf Dicarbonsäureeinheiten, mindestens zu 50 % aus einkondensierten aromatischen Dicarbonsäureresten besteht, mit einer Funktionalität von 2 bis 3 und einem Molekulargewicht von 254 bis 700.

2. Verfahren nach Anspruch 1, dadurch gekennzeichnet, daß die Mischung aus höhermolekularen Verbindungen mit mindestens zwei reaktiven Wasserstoffatomen enthält

i) 95 bis 60 Gew.% eines Polyols, Polyether-polyamins oder Polyesteramids und
ii) 5 bis 40 Gew.% mindestens eines aromatischen und/oder aromatisch-aliphatischen Polyester-polyols mit einer Funktionalität von 2 bis 3 und einem Molekulargewicht von 254 bis 700, bezogen auf das Gesamtgewicht der Mischung aus (i) und (ii).

3. Verfahren nach Anspruch 1, dadurch gekennzeichnet, daß die aromatischen und/oder aromatisch-aliphatischen Polyester-polyole (ii) in den Polyolen, Polyether-polyaminen und/oder Polyesteramiden (i) gelöst und/oder dispergiert sind.

4. Verfahren nach Anspruch 1, dadurch gekennzeichnet, daß man als Polyole (i) verwendet: Polyether-polyole, Polyester-polyole, Polythioether-polyole, hydroxylgruppenhaltige Polyacetale und/-oder hydroxylgruppenhaltige aliphatische Polycarbonate.

5. Verfahren nach Anspruch 1, dadurch gekennzeichnet, daß die aromatischen und/oder aromatisch-aliphatischen Polyester-polyole (ii) Reste von Phthalsäure, Isophthalsäure und/oder Terephthalsäure einkondensiert enthalten.

6. Verfahren nach Anspruch 1, dadurch gekennzeichnet, daß man als aromatisch-aliphatische Polyester-polyole Phthalate aus Ethylenglykol und/oder Diethylenglykol verwendet.

7. Verfahren nach Anspruch 1, dadurch gekennzeichnet, daß man als aromatische Diamine primäre aromatische Diamine verwendet, die in mindestens einer o-Stellung zu jeder Aminogruppe einen linearen und/oder verzweigten Alkylrest mit 1 bis 12 Kohlenstoffatomen gebunden enthalten.

8. Verfahren nach Anspruch 1, dadurch gekennzeichnet, daß man pro 100 Gew. Teile der Komponente (b) 5 bis 150 Gew. Teile der Komponenten (c) und gegebenenfalls (d) mitverwendet und das Äquivalenzverhältnis von NCO-Gruppen der Polyisocyanate (a) zu Zerewitinoff aktiven Wasserstoffatomen der Komponenten (b), (c) und gegebenenfalls (d) 1 : 0,85 bis 1,25 beträgt.

9. Verfahren nach Anspruch 1, dadurch gekennzeichnet, daß die Formkörper im wesentlichen kompakt sind oder einen zelligen Kern und eine kompakte Außenhaut besitzen.

10. Verfahren nach Anspruch 1, dadurch gekennzeichnet, daß die Formkörper eine Gesamtdichte von 0,2 bis 1,4 g/cm$^3$ besitzen.

**Claims**

1. A process for the one-shot preparation of cellular or non-cellular polyurethane/polyurea mouldings by reacting

(a) organic polyisocyanates,
(b) relatively high molecular weight compounds containing at least two reactive hydrogen atoms,

(c) aromatic primary diamines and, if desired,
(d) further chain extenders and/or crosslinking agents in the presence of
(e) catalysts and, if desired,
(f) blowing agents, and
(g) auxiliaries and/or additives

using the RIM technique, wherein there are used as relatively high molecular weight compounds containing at least two reactive hydrogen atoms mixtures of

(i) at least one compound from the group consisting of polyols, polyether polyamines, polyesteramides and mixtures thereof having a functionality of from 2 to 6 and a molecular weight of from 1 000 to 8 000, and

(ii) at least one aromatic and/or aromatic-aliphatic polyester polyol which contains at least 50 %, based on dicarboxylic acid units, of condensed units of aromatic dicarboxylic acid esters, and has a functionality of from 2 to 3 and a molecular weight of from 254 to 700.

2. A process as claimed in claim 1, wherein the mixture of relatively high molecular weight compounds containing at least two reactive hydrogen atoms contains

(i) from 95 to 60 % by weight of a polyol, polyether polyamine or polyesteramide, and

(ii) from 5 to 40 % by weight of at least one aromatic and/or aromatic-aliphatic polyester polyol having a functionality of from 2 to 3 and a molecular weight of from 254 to 700, the percentages being based on the total weight of the mixture of (i) and (ii).

3. A process as claimed in claim 1, wherein the aromatic and/or aromatic-aliphatic polyester polyols (ii) are dissolved and/or dispersed in the polyols, polyether polyamines and/or polyesteramides (i).

4. A process as claimed in claim 1, wherein polyether polyols, polyester polyols, polythioether polyols, hydroxyl-containing polyacetals and/or hydroxyl-containing aliphatic polycarbonates are used as polyols (i).

5. A process as claimed in claim 1, wherein the aromatic and/or aromatic-aliphatic polyester polyols (ii) contain condensed units of phthalic acid, isophthalic acid and/or terephthalic acid.

6. A process as claimed in claim 1, wherein phthalates of ethylene glycol and/or diethylene glycol are used as aromatic-aliphatic polyester polyols.

7. A process as claimed in claim 1, wherein primary aromatic diamines containing a linear and/or branched alkyl of 1 to 12 carbon atoms in at least one ortho-position to each amino group are used as aromatic diamines.

8. A process as claimed in claim 1, wherein from 5 to 150 parts by weight of components (c) and, if used, (d) are used per 100 parts by weight of component (b), and the equivalence ratio of NCO groups of polyisocyanates (a) to Zerewitinoff-active hydrogen atoms of components (b), (c) and, if used, (d) is from 1 : 0.85 to 1.25.

9. A process as claimed in claim 1, wherein the moulding is essentially non-cellular or has a cellular core and a non-cellular outer skin.

10. A process as claimed in claim 1, wherein the moulding has a total density of from 0.2 to 1.4 g/cm$^3$.

**Revendications**

1. Procédé de production d'articles moulés en résine polyuréthanne-polyurée compacte ou expansée par réaction :

a) de polyisocyanates organiques,
b) de composés de poids moléculaire élevé, comportant au moins deux atomes d'hydrogène actifs,
c) de diamines aromatiques primaires et éventuellement
d) d'autres agents d'allongement des chaînes et(ou) de réticulation, en présence
e) de catalyseurs et éventuellement
f) d'agents porogènes,
g) d'adjuvants et(ou) d'additifs,

par la technique de la réaction et du moulage par injection en une seule opération, caractérisé en ce que, en tant que composés (b) de poids moléculaire élevé, comportant au moins deux atomes d'hydrogène actifs, l'on utilise des mélanges constitués de

i) au moins un composé choisi parmi les polyols, les polyéther-polyamines, les polyesteramides et des mélanges de ceux-ci, d'une fonctionnalité allant de 2 à 6 et d'un poids moléculaire compris entre

1 000 et 8 000, et

ii) au moins un polyester-polyol aromatique et(ou) aromatique-aliphatique qui, en ce qui concerne les unités d'acide dicarboxylique, comprend au moins 50 % de groupes acide dicarboxylique aromatique condensés et possède une fonctionnalité de 2 à 3 et un poids moléculaire compris entre 254 et 700.

2. Procédé suivant la revendication 1, caractérisé en ce que le mélange de composés de poids moléculaire élevé, comportant au moins deux atomes d'hydrogène actifs, est formé de :

i) 95 à 60 % en poids d'un polyol, d'une polyétherpolyamine ou d'un polyesteramide et

ii) 5 à 40 % en poids d'au moins un polyester-polyol aromatique et(ou) aromatique-aliphatique d'une fonctionnalité de 2 à 3 et d'un poids moléculaire compris entre 254 et 700, ces pourcentages se rapportant au poids total du mélange de (i) et de (ii).

3. Procédé suivant la revendication 1, caractérisé en ce que les polyester-polyols aromatiques et(ou) aromatiques-aliphatiques (ii) sont dissous et(ou) dispersés dans les polyols, polyéther-polyamines et(ou) polyesteramides (i).

4. Procédé suivant la revendication 1, caractérisé en ce que les polyols (i) sont choisis parmi les polyéther-polyols, les polyester-polyols, les polythioétherpolyols, les polyacétals à groupes oxhydryle et(ou) les polycarbonates aliphatiques à groupes oxhydryle.

5. Procédé suivant la revendication 1, caractérisé en ce que l'on utilise des polyester-polyols aromatiques et(ou) aromatiques-aliphatiques (ii), dans lesquels sont condensés des groupes acide phtalique, acide isophtalique et(ou) acide téréphtalique.

6. Procédé suivant la revendication 1, caractérisé en ce que les polyester-polyols aromatiques-aliphatiques sont choisis parmi les phtalates dérivés de l'éthylène-glycol et(ou) du diéthylène-glycol.

7. Procédé suivant la revendication 1, caractérisé en ce que l'on emploie comme diamines aromatiques des diamines aromatiques primaires substituées dans au moins une position ortho par rapport à chacun des groupes amino par un radical alkyle en $C_1$ à $C_{12}$ à chaîne droite et(ou) ramifiée.

8. Procédé suivant la revendication 1, caractérisé en ce que, pour 100 parties en poids du composant (b), on utilise entre 5 et 150 parties en poids des composants (c) et des composants (d) éventuels et le rapport des équivalents en groupes —NCO des polyisocyanates (a) aux atomes d'hydrogène actifs selon Zerevitinov des composants (b) et (c) et du composant (d) éventuel est compris entre 1 : 0,85 et 1 : 1,25.

9. Procédé suivant la revendication 1, caractérisé en ce que les articles moulés sont essentiellement compacts ou constitués d'un noyau cellulaire entouré d'une peau extérieure compacte.

10. Procédé suivant la revendication 1, caractérisé en ce que la masse volumique totale des articles moulés est comprise entre 0,2 et 1,4 g/cm$^3$.